# EUROPÄISCHE PATENTSCHRIFT

(11) **EP 1 178 913 B1**
(45) Veröffentlichungstag und Bekanntmachung des Hinweises auf die Patenterteilung: **05.02.2003**
(21) Anmeldenummer: 00943616.3
(22) Anmeldetag: 17.05.2000
(51) Int. Cl.: B62D 25/12, B60R 21/34

(54) **FRONTHAUBENANORDNUNG**
FRONT HOOD ASSEMBLY
ENSEMBLE CAPOT AVANT

(30) Priorität: 17.05.1999 DE 19922107; 17.05.1999 DE 19922455; 17.05.1999 DE 19922454; 08.10.1999 DE 19948461
(43) Veröffentlichungstag der Anmeldung: 13.02.2002
(73) Patentinhaber: Edscha AG, 42855 Remscheid (DE)
(72) Erfinder: POLZ, Andreas, 45881 Gelsenkirchen (DE); SCHNEPPENHEIM, Jörg, 82110 Germering (DE); SCHLEGEL, Peter, 42327 Wuppertal (DE)
(74) Vertreter: Sparing, Rolf Klaus
(86) Internationale Anmeldenummer: DE0001597
(87) Internationale Veröffentlichungsnummer: WO00069703

(56) Entgegenhaltungen:
- EP-A- 0 509 690
- PATENT ABSTRACTS OF JAPAN vol. 008, no. 120 (M-300), 6. Juni 1984 (1984-06-06) & JP 59 026370 A (NISSAN JIDOSHA KK), 10. Februar 1984 (1984-02-10)

## Beschreibung

Die Erfindung betrifft eine Fronthaubenanordnung nach dem Oberbegriff des Anspruchs 1. Die Erfindung betrifft ferner ein Viergelenk-Scharnier nach dem Oberbegriff des Anspruchs 22.

Aus der Praxis sind inzwischen zahlreiche Sicherheitseinrichtungen wie Airbag und dgl. für Insassen von Personenkraftwagen bekannt. Dagegen sind Schutzmaßnahmen für Fußgänger, die vom Bug einen Personenkraftwagen erfaßt werden, bisher kaum vorgeschlagen oder praktisch umgesetzt worden. Als besonders problematisch erweisen sich Unfälle mit Fußgängern, die bei Geschwindigkeiten bis zu 60 km/h erfolgen, da der Fußgänger, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgern des Fahrzeugs kommt. Es wäre wünschenswert, wenn der Aufprall insbesondere des Kopfes eines Fußgängers, in seinen Folgen abgernildert werden könnte. Bei Geschwindigkeiten über 60 km/h wird dagegen der Fußgänger, nachdem er erfaßt wurde, über das Fahrzeug geschleudert.

DE-C-29 22 893 schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbauteilen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen.

Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschreibt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolbe-zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschlosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

EP-A-0 509 690 beschreibt eine gattungsgemäße Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Die Schwenkbewegung wird beispielsweise durch ein Viergelenkscharnier geführt, das sonst zur Verschwenkung der Fronthaube eingesetzt wird, wenn der Zugang zum Motor und anderen Teilen freigegeben werden soll. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

DE-A-197 12 961 beschreibt die Anordnung einer Fronthaube an einem Fahrzeug, bei der ein Scharnier auf einem Scharnierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschloß für die Fronthaube eine Schwenkachse festlegt, die keine wahlfreie Verlagerung des Scharnierträgers zuläßt, weshalb der beschriebene Scharnierträger beispielsweise blockiert.

Insgesamt ist noch keine Lösung vorgeschlagen worden, die ein kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 bzw. ein Viergelenk-Scharnier nach dem Oberbegriff des Anspruchs 22 vorzuschlagen, die einen kostenmäßig und technisch realisierbaren Fußgängerschutz liefern.

Diese Aufgabe wird bei der eingangs genannten Fronthaubenanordnung erfindungsgemäß mit den kennzeichnenden Merkmalen des Anspruchs 1 gelöst. Diese Aufgabe wird bei dem eingangs genannten Viergelenk-Scharnier erfindungsgemäß mit den kennzeichnenden Merkmalen des Anspruchs 22 gelöst.

Die Ausbildung des Mehrgelenk-Scharniers mit wenigstens einem mit veränderbarer Länge ausgebildeten Lenker ist eine Verkörperung des allgemeinen Gedankens der Erfindung, unter Überlast eine Veränderung des Abstands der beiden Anlenkungen des wenigstens einen Lenkers zuzulassen, um damit das Mehrgelenk für eine weitere Schwenkkurve, die sich von der eigentlichen Schwenkkurve des Mehrgelenks unterscheidet, freizugeben.

Die erfindungsgemäße Fronthaubenanordnung weist vorteilhaft drei Endstellungen auf, neben der bekannten Schließstellung, bei der die Fronthaube verriegelt ist und die während der Fahrt des Fahrzeugs eingenommen wird und der ebenfalls bekannten Öffnungsstellung, bei der der Zugang zu dem Motorraum für eine Bedienperson freigegeben ist noch eine dritte Endstellung, die als Überlaststellung bezeichnet werden kann und die nachstehend noch in Einzelheiten erläutert wird, um den Anforderungen an eine unter dem Aufprall eines Fußgängers zurückweichenden der Fronthaube zu genügen.

Das Mehrgelenk-Scharnier kann vorteilhaft als Viergelenk-Scharnier ausgebildet sein, es ist aber alternativ möglich, es als Siebengelenk-Scharnier auszubilden oder mit nur einem Lenker als Zweigelenk-Scharnier.

In der Ausgangslage ist die Fronthaube durch das Haubenschloß, das vorzugsweise im vorderen Bereich der Fronthaube angeordnet ist, verriegelt, wobei das Viergelenk-Scharnier aus zwei Lenkern und zwei an den in den Endbereichen der Lenkern angeordneten Drehpunkten gelenkig mit den Lenkern verbundenen Scharnierteilen, die über bekannte Anschlagmittel der Fronthaube bzw. mit der Karosserie des Fahrzeugs verbunden sind, einen Schwenkweg der Fronthaube definiert, der ein freies hin und her schwenken der Fronthaube zwischen der Öffnungsstellung und der Schließstellung zur wahlweisen Freigabe des Zugangs zum Motorraum ermöglicht. In der Öffnungsstellung, deren Erreichen vorzugsweise mit Unterstützung einer Feder, beispielsweise einer Gasfeder, unterstützt ist, kann die Fronthaube über eine Stange zwischen Karosserie und Fronthaube gehalten werden, um einer Bedienperson einen ungefährdeten Zugang zu ermöglichen. Alternativ kann bei Erreichen einer Übertotpunktlage des Viergelenk-Scharniers bzw. der Viergelenk-Scharniere, da in der Regel an beiden hinteren Ecken der in der Abwicklung viereckig ausgebildeten Fronthaube jeweils eines angeordnet ist, die Fronthaube ohne externe Hilfsmittel gehalten sein.

Während der Fahrt des Fahrzeugs , bei dem es sich Zweckmäßigerweise um einen Kraftwagen handelt, ist die Fronthaube in ihrer Schließstellung angeordnet und durch das Haubenschloß verriegelt, so daß der Motorraum, in dem eine Reihe von harten Teilen wie der Motorblock, der Federbeindohm und andere angeordnet sind, durch die Fronthaube in der Art einer schützende Hülle, die in einem ausreichenden Abstand von den wenigstens bei Aufprall für den Kopf eines Fußgängers schädlichen Teile angeordnet ist, einen wahlweise an der Unterseite der Fronthaube mit einem komprimierbar ausgebildeten, ggf. mit Aufprall- und/oder Schallenergie aufnehmenden Schaum ausgekleideten oder auch freien Abstand aufweist.

Die erfindungsgemäße Fronthaubenanordnung ermöglicht ausgehend zumindest von der Schließstellung der Fronthaube eine Verlagerung der Fronthaube in Richtung auf die Überlaststellung, in der der Abstand zwischen der Fronthaube und den gefährlichen Teilen des Motorraums reduziert ist, wobei erfindungsgemäß im Überlastfall das Viergelenk-Scharnier sowie ggf. weitere Teile der Fronthaubenanordnung für die Verlagerung in Richtung auf die Überlaststellung bzw. in die Überlaststellung einen derartigen Anteil an Aufprallenergie des Fußgängers in Verlagerungs- bzw. Deformationsenergie umwandeln, daß der Aufprall bei einer Geschwindigkeit des Fahrzeugs von bis zu 60 Km/h für den Fußgänger mit hoher Wahrscheinlichkeit für diesen keine tödlichen Folgen mehr hat.

Unter der Last eines Aufpralls eines Fußgängers wird die Fronthaube durch eine Deformation wenigstens eines Lenkers des Viergelenk-Scharniers in Richtung auf die Überlaststellung verlagert, wobei der Verlagerungsweg durch Umwandlung der Aufprallenergie aufgrund des allmählichen Nachgebens der Fronthaube den Aufprall mildert und damit die Schwere des Aufpralls reduziert. Es versteht sich, daß auch eine Deformationsenergie der Fronthaube selbst hierbei zu berücksichtigen ist, wobei dies durch die Einspannung in ein Haubenschloß und zwei Viergelenk-Scharniere in der Regel nur begrenzt möglich ist.

Um die Verlagerungsbewegung der Fronthaube in Richtung auf die Überlaststellung zu ermöglichen, ist wenigstens einer der Lenker des Vierglenk-Scharniers zu einer Änderung seiner Länge ausgebildet, wobei die Art der Längenänderung, solange sie mit einer Energieumwandlung einhergeht, nicht auf eine bestimmte technische Ausgestaltung festgelegt ist. Es kommen sowohl reversible Längenänderungen durch vorsehen von Energiespeichern in der Art von Federn oder dergleichen in Betracht als auch irreversible Längenänderungen durch absprengbare Schalungen des Lenkers, komprimierbaren Schaum, Metallegierungen, die wenigstens abschnittsweise eine Veränderung der Länge bei entsprechender Einschnürung des Querschnitts des Lenkers zulassen oder auch als Klemmpassung ausgebildete, zweiteilig zusammen gesteckte Lenker, bei denen das Aufweiten der Preßpassung die erforderliche Deformationsenergie liefert. Es ist auch unwesentlichen, ob einer der beiden Lenker des Viergelenk-Scharniers zu diesem Zweck eine Verlängerung erfährt oder der andere der beiden Lenker hierzu eine Verkürzung, z.B. eine Stauchung erfährt.

Zweckmäßigerweise sind beide Lenker des Viergelenkscharniers mit veränderbarer Länge ausgebildet, wobei auch hier sowohl eine Kombination aus zwei - ggf. in einem unterschiedlichen Maße - ausdehnbaren Lenkern oder einem ausdehnbaren und einem stauchbaren Lenker in Betracht kommt. Neben dem Vorteil, daß bei zwei zu einer Änderung ihrer Länge ausgebildeten Lenkern die Aufprallenergie auf beide Lenker verteilt wird und somit die Fronthaubenanordnung besser dimensioniert werden kann, läßt sich hierdurch auch ein asymmetrisches Aufprallen auf die Fronthaube besser auffangen, und der für die Umwandlung der Aufprallenergie erforderliche Verlagerungsweg der Fronthaube kann entsprechend etwas kürzer vorgesehen werden, wodurch der von der Fronthaube zu den harten Teilen des Motorraums zu belassende Abstand reduziert werden kann und der Luftwiderstandsbeiwert des Fahrzeugs weniger beeinträchtigt wird. Zudem ist es dann möglich, die Verlagerungsbewegung um die Zwischengelenke dann so vorzusehen, daß bei Verschwenken in Richtung auf die Überlaststellung die Schwenkbewegung um das Haubenschloß herum eine Drehbewegung definiert, so daß eine horizontale Verschiebung der Fronthaube nicht vorgesehen werden muß.

Vorzugsweise umfaßt der wenigstens eine mit veränderbarer Länge ausgebildete Lenker einen integrierten Energiespeicher, der von der Aufprallenergie gespannt wird und damit eine reversible Längenänderung des Lenkers bewirkt. Diese Weiterbildung ist deswegen von besonderem Vorteil, weil möglicherweise unbeabsichtigte Längenänderungen durch andere Überlasten, beispielsweise dadurch, daß Kinder auf der Fronthaube auf und ab springen oder dergleichen, zwar zu einer Schwenkbewegung in Richtung auf die Überlaststellung der Fronthaube führen, die Fronthaube im Anschluß an die unbeabsichtigte Beanspruchung aber wieder in die Schließstellung zurück verschwenken. Hierdurch kann die Fahrbereitschaft des Fahrzeugs nach einer Überlast oder einem Aufprall schnell wiederhergestellt werden und zudem das Viergelenk-Scharnier auch nach einem ersten Aufprall eines Fußgängers auf die Fronthaube mit unveränderter Charakteristik weiter eingesetzt werden. Die Energiespeicher sind zweckmäßigerweise so in dem Lenker angeordnet, daß sie in der Schließstellung die Haltekraft der Fronthaube soweit unterstützen, daß bei einem Frontalzusammenstoß der Insassenschutz nicht herabgesetzt ist.

Zweckmäßigerweise ist der Energiespeicher eine Feder, die gleichermaßen als Zug- oder Druckfeder ausgebildet sein kann und somit eine Längenänderung vollzieht, die in die Richtung der sie spannenden Kraft erfolgt. Somit kann mittels einer Feder vorteilhaft sowohl eine Stauchung als auch eine Verlängerung des Lenkers konstruktiv vorgesehen werden. Bei der Feder kann es sich beispielsweise um eine Schraubenfeder oder dergleichen handeln. Im Falle einer vorgesehenen Verlängerung des Lenkers kann dieser derart aufgebaut sein, daß die vorzugsweise als mechanische Schraubenfeder ausgebildete Feder jeweils in zwei gegenseitig anschlagenden Teillenkern in einer zugehörigen, dem jeweils anderen Teillenker zugekehrten Aussparung angeordnet sind, wobei die Fuge hierzwischen nahezu unsichtbar ist und sich erst im Überlastfall ausdehnt.

Der Energiespeicher kann ferner einen deformierbaren Bestandteil umfassen, der die Aufprallenergie in Deformationsenergie durch irreversible plastische Formänderung des deformierbaren Bestandteils des Lenkers umwandelt. Hierbei wird durch die Längenänderung des Lenkers die Aufprallenergie durch die plastische Umformung des deformierbaren Bestandteils abgebaut, wobei die hieraus resultierende Längenänderung bzw. der hieraus resultierende Anteil an der Längenänderung des Lenkers nur durch eine erneute plastische Formänderung, beispielsweise mit Hilfe eines entsprechenden Werkzeugs, umkehrbar ist, weshalb für diesen Bestandteil nach einem Aufprall die Fronthaube bleibend in Richtung auf ihre Aufprallstellung verlagert bleibt.

Ein bevorzugter deformierbarer Bestandteil ist eine Ummantelung des Lenkers aus Schaum oder Kunststoff, der plastisch deformierbar ist, wobei auch der gesamte Lenker aus diesem Material bestehen kann. Alternativ ist es möglich, den wenigstens einen mit veränderbarer Länge ausgebildeten Lenker als in zwei Kurzlenkerteile geteilten Lenker auszubilden, die vermittels einer Kunststoffumspritzung eine bei Überschreitung der Normallast brechende Soll-Bruchstelle definieren und so das Vierglenksystem freigeben. Diese Variante hat insbesondere den Vorteil, daß das Viergelenk-Scharnier durch Austauschen des gebrochenen Lenkers wiederherstellbar ist, wobei alternativ hierzu auch das gesamte Viergelenk-Scharnier ausgetauscht werden kann und der defekte Lenker durch Recycling ersetzt wird. Dieses System hat insbesondere den Vorteil, daß die Fronthaube im Falle eines Frontalzusammenstoßes mit einem anderen Fahrzeug oder gegen ein feststehendes Hindernis immer noch durch den anderen, starren Lenker gehalten wird, und hierdurch die Gefahr deutlich herabgesetzt ist, daß sich die Fronthaube durch die Frontscheibe drückt und damit in den Insassenraum des Fahrzeugs eindringt.

Es versteht sich, daß das Vorsehen einer plastisch verformbaren Kunststoffumspritzung gleichermaßen für Zug- und Druckbeanspruchungen in Betracht kommt. Alternativ zu der vorstehenden Lösung mit einer Kunststoffummantelung kommen auch Lenkerteile mit abscherbaren Verbindungen, gegen einen elastischen oder plastischen Widerstand deformierbare teleskopierbare Lenker und weitere zu einer Längenänderung ausgebildete Lenker in Betracht.

Bei einem teleskopierbaren Lenker ist vorzugsweise das den anderen Lenkerteil aufnehmende Lenkerteil als hohler Zylinder mit einem oder mehreren fluiden oder pastösen Medien gefüllt, wobei durch Eindringen des aufgenommenen Lenkerteils in den Zylinder diese Medien durch einen Drosselauslaß in dem Zylinder gepreßt werden, so daß durch eine gezielte Auswahl der Medienzusammensetzung und der Drossel der Widerstand des teleskopierbaren Lenkers sowohl derart ausgelegt werden kann, daß eine Mindestlast zunächst überschritten werden muß als auch derart, daß der zur Verfügung stehende Verlagerungweg optimiert wird. Hierzu kann der Zylinder auch eine mechanische oder Gasfeder umfassen.

Es versteht sich, daß soweit vorstehend ein mit veränderbarer Länge ausgebildeter Lenker bezeichnet ist, dieser nicht auf einen axial elongierbaren Lenker beschränkt sein soll, sondern auch ein zugleich seine Krümmung ändernder Lenker ist damit auch gemeint. In der Praxis der Viergelenk-Scharniere weisen deren Lenker in der Regel eine Krümmung auf, so daß die veränderbare Länge Lenker mit veränderbaren Abstand der beiden Drehgelenke des Lenkers zueinander umfaßt.

Es versteht sich, daß der Energiespeicher des mit veränderbarer Länge ausgebildeten Lenkers sowohl einen reversiblen als auch zugleich einen irreversiblen Bestandteil umfassen kann, wodurch die Abstimmung und Auslegung des Viergelenk-Scharniers auf den zu erwartenden Aufprall und auf den Abstand des Aufpralls auf die von Fahrzeugmodell zu Fahrzeugmodell unterschiedlich große Fronthaube von den an der Fronthaube angeschlagenen Scharnierteilen der Viergelenk-Scharniere berücksichtigt werden kann, und ferner eine Standardisierung durch unterschiedliche Auslegung im wesentlichen der Feder bei einem bei verschieden Fahrzeugmodellen ansonsten gleichartigen plastisch formänderbaren Bestandteil vorgesehen werden kann.

Es versteht sich, daß besonders bevorzugt eine Fronthaubenanordnung ist, deren Verlagerungsbewegung vollständig reversibel ist, da insbesondere eine solche Anordnung sich in einfacher Weise bei routinemäßigen Überprüfungen des Fahrzeugs zu dessen technischer Überwachung auf Funktionsfähigkeit und Zuverlässigkeit prüfen läßt. Es ist daher zweckmäßig vorgesehen, daß für den Fall des Einsatzes von Bestandteilen, die eine irreversible Änderung im Falle eines Aufpralls ausführen, diese derart anzuordnen, daß sie durch optische Prüfung darauf untersucht werden können, ob sie bereits beschädigt sind.

Um eine Verlagerung ausgehend von der Schließstellung auf die Öffnungsstellung bzw. auf die Überlaststellung der Fronthaube relativ zur Karosserie des Fahrzeugs sicher zu stellen ist es zweckmäßig, daß das Viergelenk-Scharnier an die Karosserie anschlagende Scharnierteil fest an der Karosserie des Fahrzeugs anzuordnen, damit die Schwenkbewegung um die karosserieseitigen Drehpunkte der Lenker ausgeführt werden kann.

Gemäß einer bevorzugten Weiterbildung der Erfindung ist es möglich, daß bei einem Aufprall einer der Lenker des Viergelenk-Scharniers eine in Richtung auf die Funktionslage des Lenkers vorgespannte Energiespeichereinheit gegen ihre Vorspannung zur wenigstens teilweise Kompensation der Änderung des wenigstens einen Lenkers komprimiert. Der bei Verlagerung aus der Schließstellung auf die Öffnungsstellung der Fronthaube und zurück durch die Energiespeichereinheit vorgespannte Drehpunkt des Lenkers bleibt unverändert und wird erst im Falle eines Fußgängeraufpralls unter teilweise Abbau der Aufprallenergie gegen die vorgespannte Energiespeichereinheit unter Spannung derselben verlagert, wodurch der vorzugsweise starre Lenker gemeinsam mit der ihm zugeordneten Energiespeichereinheit die horizontale Verschiebung der Fronthaube aufgrund des wenigstens einen Lenkers kompensiert und damit ein Hineindrücken der Fronthaube in die Windschutzscheibe und damit in die Fahrgastzelle des Fahrzeugs vorteilhaft auch im Falle eines Frontalzusammenstoßes unterbindet.

Zweckmäßigerweise ist das Haubenschloß in seinem geschlossenen Zustand derart ausgebildet, daß es ein horizontales Verlagern der Fronthaube zuläßt, um die durch die aufgrund des wenigstens einen Lenkers im Überlastfall weiter nach hinten verlagerten, an der Fronthaube angreifenden Drehpunkte des wenigstens einen Lenkers durch eine entsprechende Verlagerungsbewegung der Fronthaube nach hinten zu ermöglichen. Zu diesem Zweck kann das Haubenschloß derart ausgebildet sein, daß es in einer üblichen Weise zur Entriegelung ausgebildet ist, im geschlossenen und verriegelten Zustand jedoch einen horizontalen Ausweichraum bereithält, der zweckmäßigerweise gegen einen Widerstand, der ebenfalls reversibel oder irreversible deformierbar ist, die Verlagerung der Fronthaube nach hinten ermöglicht. So kann beispielsweise der Ausweichraum die Aufnahme für eine Druckfeder bilden, die z.B. ein als Bügelteil ausgebildetes Halteteil der Fronthaube, das in dem Schloß verriegelt gehalten wird, in Richtung auf. eine die Entriegelung ermöglichende Lage vorspannt und im Falle eines Fußgängeraufpralls gespannt wird, wodurch ein Teil der Aufprallenergie absorbiert wird. Diese Maßnahme ist besonders dann vorteilhaft, wenn der Aufprall des Kopfes eines Kindes, der überwiegend im vorderen Bereich der Fronthaube zu erwarten ist, abzufedern ist. Des weiteren ist es möglich, den Ausweichraum mit einem Kunststoffschaumteil auszukleiden, das unter dem Druck eines Aufpralls zerkrümelt und nach dem Aufprall durch ein Ersatzteil ersetzbar ist, wodurch die Funktionsfähigkeit der Fronthaubenanordnung auch nach einem ersten Aufprall für weitere Aufpralle gegeben ist.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand von bevorzugten Ausführungsbeispielen einer erfindungsgemäßen Fronthaubenanordnung näher erläutert.
- Fig. 1: zeigt eine ausschnittsweise schematisierte Seitenansicht eines Fahrzeugs mit einem bevorzugten Ausführungsbeispiel einer erfindungsgemäßen Fronthaubenanordnung.
- Fig. 2: zeigt eine schematische Seitenansicht einer ersten Ausführungsform eines Viergelenk-Scharniers der Fronthaubenanordnung aus Fig. 1 bei geschlossener Fronthaube.
- Fig. 3: zeigt eine schematische Seitenansicht des Viergelenk-Scharniers aus Fig. 2 bei geöffneter Fronthaube.
- Fig. 4: zeigt eine schematische Seitenansicht des Viergelenk-Scharniers aus Fig. 2 und 3 bei überlasteter Fronthaube.
- Fig. 5: zeigt eine schematische Seitenansicht einer weiteren Ausführungsform eines Viergelenk-Scharniers der Fronthaubenanordnung aus Fig. 1 bei geschlossener Fronthaube.
- Fig. 6: zeigt eine schematische Seitenansicht einer weiteren Ausführungsform eines Viergelenk-Scharniers der Fronthaubenanordnung aus Fig. 1 bei geschlossener und geöffneter Fronthaube.
- Fig. 7: zeigt eine schematische Seitenansicht des Viergelenk-Scharniers aus Fig. 6 bei überlasteter Fronthaube.
- Fig. 8: zeigt eine schematische Seitenansicht einer weiteren Ausführungsform eines Viergelenk-Scharniers der Fronthaubenanordnung aus Fig. 1 bei geschlossener und geöffneter Fronthaube.
- Fig. 9: zeigt eine schematische Seitenansicht des Viergelenk-Scharniers aus Fig. 8 bei überlasteter Fronthaube.

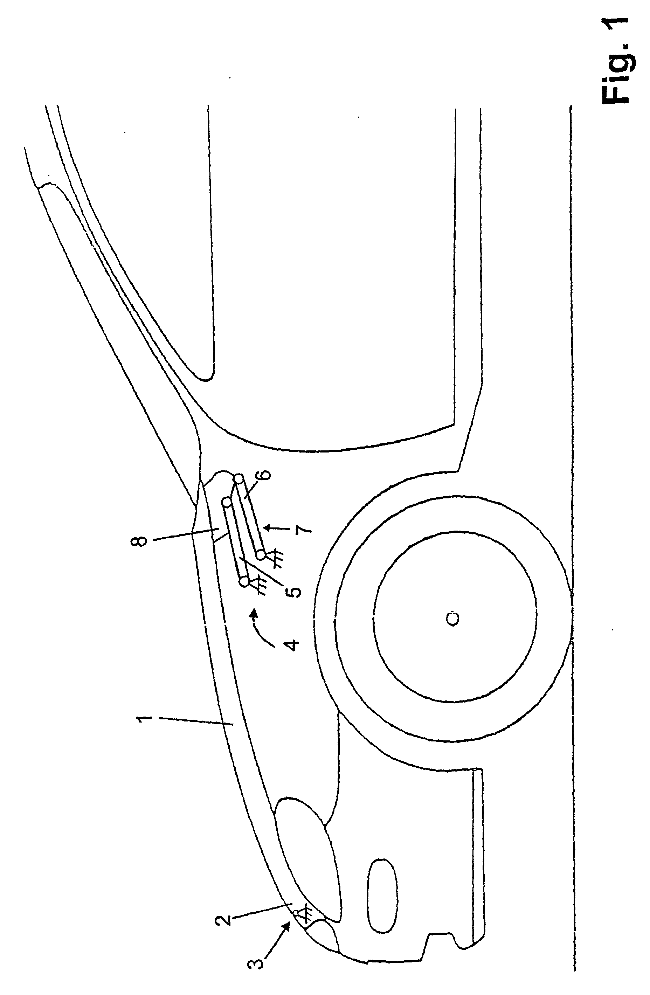

Fig. 1 zeigt in Seitenansicht die Frontpartie eines Kraftfahrzeuges, dessen Motorraum durch eine Fronthaube 1 verschließbar ist. Die Fronthaube 1 wird mittels eines im Vorderbereich 2 der Fronthaube 1 angeordneten Haubenschlosses 3 ver- bzw. entriegelt und ist an ihrer der Fahrerkabine zugewandten Seite jeweils randseitig mittels eines von zwei Scharnieren 4 an dem Rahmen der Karosserie angelenkt. Das Scharnier 4 ist vorliegend als Viergelenk-Scharnier ausgebildet, das aus einem längeren Lenker 5 und einem kürzeren Lenker 6 besteht, deren Gelenke an ein am Rahmen befestigten Teil 7 bzw. an einer an der Fronthaube 1 angeordnetes Teil 8 schwenkbar angelenkt sind. Die Fronthaube 1 läßt sich aus der in Fig. 1 dargestellten Schließstellung durch Verschwenken um die Gelenke am Rahmenteil 7 in seine Öffnungsstellung und wieder zurück verschwenken.

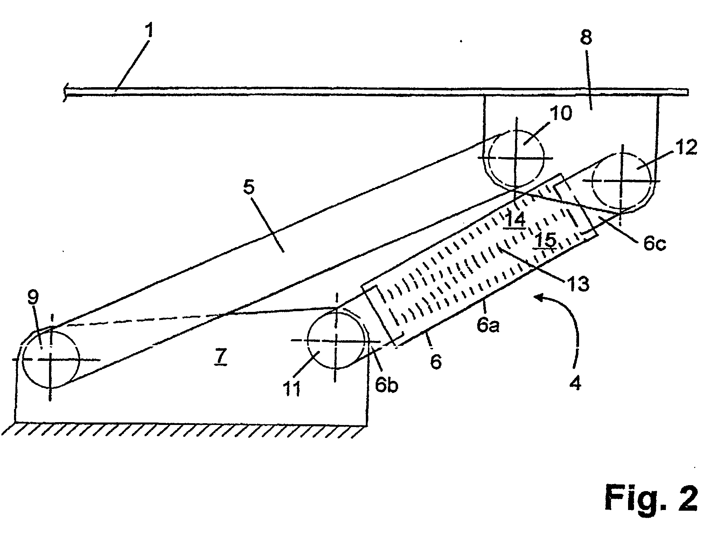

In Fig. 2 ist eine erste bevorzugte Ausführungsform des Scharniers 4 gezeigt, wobei die Drehgelenke des längeren Lenkers 5 mit 9 und 10 bezeichnet sind und die Drehgelenke des kürzeren Lenkers 6 mit 11 und 12 bezeichnet sind.

Man erkennt, daß die Gelenke 9 bis 12 alle vier fest in dem zugeordneten Rahmenteil 7 bzw. Fronthaubenteile 8 angeordnet sind.

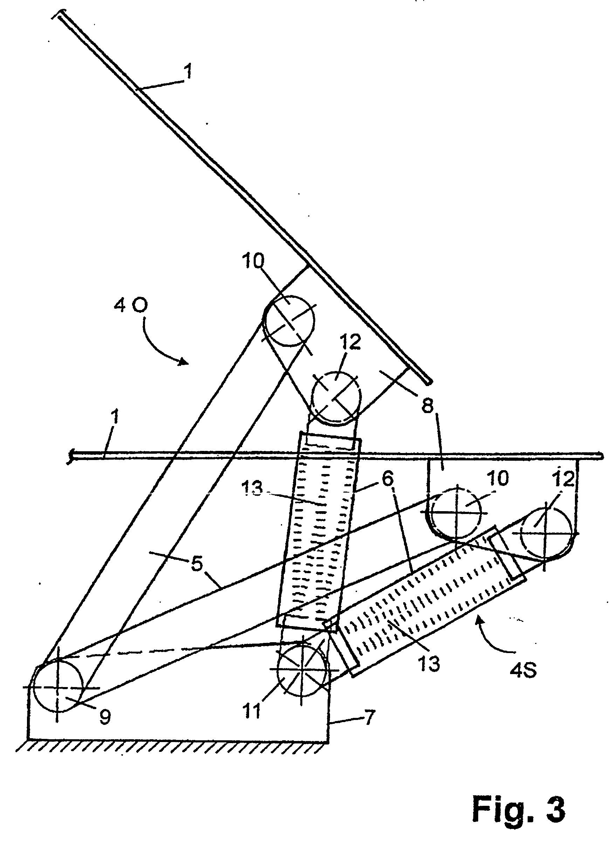

Während der längere Lenker 5 als starrer Lenker ausgebildet ist, ist der kürzere Lenker 6 in einem zentralen Bereich 6a, an den sich die die Gewerbe der Drehgelenke 11, 12 aufweisenden Endstücke 6b bzw. 6c anschließen, mit einer als Doppelfeder ausgebildeten integrierten Energiespeicher 13 ausgestattet, der eine Veränderung der Länge des kürzeren Lenkers 6 dergestalt zuläßt, daß der Abstand der Achsen der Drehlenke 11 und 12 veränderlich ist. Hierzu ist der mittels starker Zugfedern ausgebildete Energiespeicher 13 unter Überwindung seiner Vorspannung zu belasten, wobei die Last derart ausgelegt ist, daß sie das Eigengewicht der an dem Haubenteil 8 angeordneten Fronthaube 1 nennenswert übersteigen muß. Neben einer Druckfeder 14 ist in dem Abschnitt 6a des kürzeren Lenkers 6 auch eine Zugfeder 15 integriert, so daß der voreingestellte Abstand der Achsen der Drehgelenke 11, 12 von der im unbelasteten Zustand wiedergegebenen Länge des kürzeren Lenkers 6 eingehalten ist. Wie in Fig. 3 genauer zu sehen, lastet ein Teil des Eigengewichts der Fronthaube 1 in der in Fig. 3 dargestellten Öffnungsstellung des Viergelenkscharniers 4 aus Fig. 2 auf dem kürzeren Lenker 6, der unter dieser Last zur Vermeidung einer Schwenk-Kipp-Bewegung der Fronthaube 1 nur unwesentlich nachgeben soll. Die Druckfeder 14 und die Zugfeder 15 sind in den Fig. 2 bis 4 schematisch dargestellt und dienen in dieser schematischen Darstellung lediglich der Illustration der unterschiedlichen entlasteten bzw. belasteten Zustände des Viergelenk-Scharniers 4. Man erkennt insbesondere in Fig. 3, daß sowohl in der Schließstellung, die mit dem Symbol S angedeutet ist, als auch in der Öffnungsstellung, die mit dem Symbol O angedeutet ist, die Länge des kürzeren Lenkers 6 im wesentlichen unverändert bleibt.

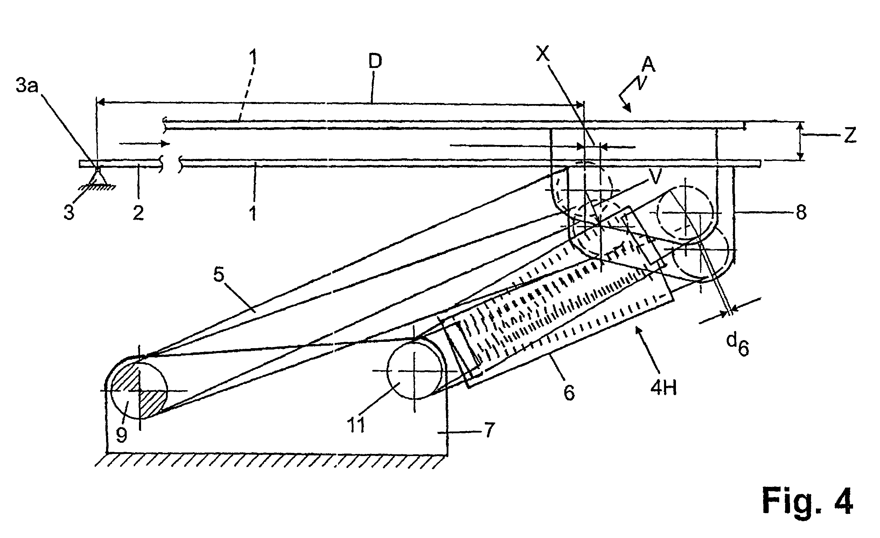

In Fig.4 ist der Überlastfall aufgrund eines Fußgängeraufpralls auf die Fronthaube 1 und die sich hieraus ergebende Deformation des Viergelenk-Scharniers 4 insgesamt und insbesondere des kürzeren Lenkers 6 näher dargestellt. Gestrichelt ist in Fig. 4 die Schließstellung S dargestellt, während in durchgezogener Linie die Überlaststellung H aufgrund eines schematisch mit Pfeil A angedeuteten Aufpralls eines Fußgängers dargestellt ist. In Fig. 4 ist zudem schematisch das Haubenschloß 3 dargestellt, welches, wie in der schematischen Darstellung zu erkennen, verschieblich an der Karosserie angeordnet ist, um eine horizontale Verlagerung der Fronthaube 1, die einhergeht mit einem Verschwenken der Fronthaube 1 um die in dem Haubenschloß gebildete, mit 3a bezeichnete, Achse zu ermöglichen. Man erkennt, daß die Fronthaube 1 im Bereich des an diese angeschlagenen Haubenteils 8 einen Verlagerungsweg v ausführt, der mit dem Pfeil, der an der Achse des Drehgelenks 10 angetragen ist, illustriert ist. Der Weg v setzt sich aus einer horizontalen Komponente x und einer vertikalen Komponente z zusammen, die in Fig. 4 ebenfalls angetragen sind. Man erkennt also, daß bei Aufprall eines Fußgängers die Fronthaube sich um den Betrag z senkt und entsprechend ihren Abstand zu den gegebenenfalls harten und damit verletzungsgefährdenden Teilen im Motorraum verringert, während zugleich die Fronthaube 1 und damit auch das Haubenschloß 3 sich um den Betrag x, in Fahrtrichtung gesehen nach hinten, verlagert. Wäre der kürzere Lenker 6 ebenso wie der längere Lenker 5 starr ausgebildet, könnte die Verlagerungsbewegung durch das Viergelenk-Scharnier 4 nicht vollzogen werden, da die Viergelenke 9 bis 12 nur einen Schwenkweg, nämlich den, der für die Öffnungsbewegung der Fronthaube 1 zugrundegelegt wird, definieren und die Verlagerungsbewegung somit statisch überbestimmt wäre. Aufgrund der längenveränderbaren Ausbildung des kürzeren Lenkers 6 wird die statische Überbestimmung des Viergelenks 4 aufgehoben und die Umwandlung der Aufprallenergie eines Fußgängeraufpralls auf die Fronthaube 1 wird in die entsprechende Deformationsenergie (sowie in weitere, den Aufprall aus anderen Gründen abmindernde Energien) umgewandelt. Die Längenänderung des kürzeren Lenkers 6 ist in Fig. 4 mit d6 bezeichnet. Man erkennt, daß für eine relativ bedeutsame vertikale Verlagerung eine geringe Elongation des kürzeren Lenkers 6 ausreicht, die entlang einer stetigen Dehnungkurve d über z verläuft, so daß eine realistische Umwandlung der Aufprallenergie in Deformationsenergie des Energiespeichers 13 gegeben ist. Man erkennt femer, daß durch die Elongation des kürzeren Lenkers 6 die beiden Lenker 5 und 6 ihre Winkellage zueinander geringfügig geändert haben, die sonst statisch das Viergelenk 4 bestimmt.

Im vorliegenden Beispiel beträgt die Verschiebung der Fronthaube 1 nach hinten ca. 0,61% der Länge D der Fronthaube 1 bzw. des wirksamen Abstands zwischen dem Haubenschloß 3 und dem Drehgelenk 10. Die Verlängerung des kürzeren Lenkers 6 beträgt vergleichsweise hierzu nur ca. 0,13%, und liegt somit bei weniger als einem Viertel der Wegstrecke x. Die Höhenänderung z hängt von dem Meßpunkt an der Fronthaube ab und beträgt im Bereich des Haubenteils 8 etwa das Doppelte der Länge x, also ca. 1,2%.

Soweit nicht ausdrücklich angegeben, bezeichnen dieselben Bezugszeichen bei der Beschreibung der nachfolgenden Ausführungsbeipiele dieselben Teile wie in den Fig. 1 bis 4, so daß in soweit auf die vorstehende Erläuterungen verwiesen wird, um Wiederholungen zu vermeiden.

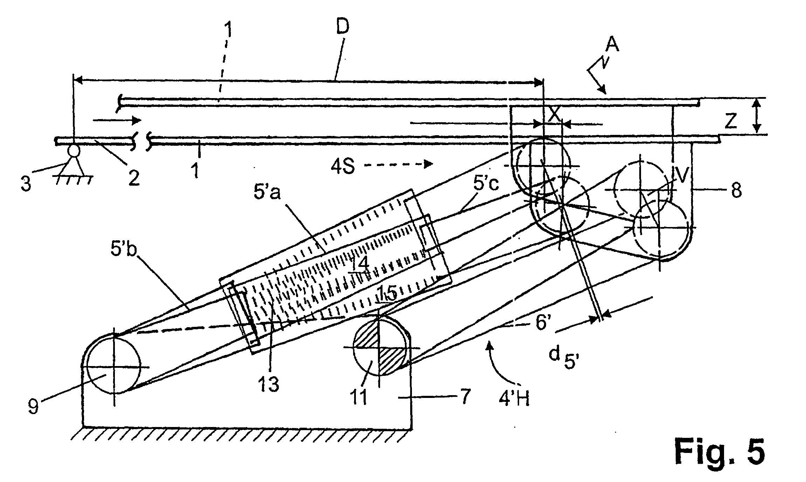

Eine weitere Ausführungsform eines Viergelenkscharniers 4' für eine Fronthaubenanordnung gemäß Fig. 1 ist in Fig. 5 dargestellt. Die vorliegende Fronthaubenanordnung bezeichnet in gestrichelter Darstellung die Schließstellung S der Fronthaube 1 und mit H die Überlaststellung der Fronthaube 1.

Anders als in den Fig. 2 bis 4 ist in der vorliegenden Ausführungsform nicht der kürzere Lenker 6', sondern der längere Lenker 5' längenänderbar ausgebildet, wobei in der gezeigten Ausführungsform die horizontale Längenänderung x etwa 0,76% der Länge der Fronthaube 1 zwischen Haubenschloß 3 und Drehgelenk 10 ausmacht, während die Elongation des längeren Lenkers 5' im Verhältnis zur Gesamtlänge der Fronthaube ca. 0,14% ausmacht. Die in Fig. 5 gezeigte Ausführungsform des Scharniers 4 hat insbesondere den Vorteil, daß in der (nicht dargestellten) Öffnungsstellung der überwiegende Teil des Eigengewichts der Fronthaube 1 mit dem hieran angeordneten Haubenteil 8 von dem kürzeren Lenker 6' aufgenommen wird, der jedoch starr und nicht längenveränderbar ausgebildet ist, so daß der als Zugfeder vorzusehende Energiespeicher 13 besser auf das Auprallverhalten abgestimmt werden kann, während die Druckfeder 15 gegebenenfalls schwächer ausgelegt oder fortgelassen werden kann. Der Aufbau des Lenkers 5' mit Teilen 5'a, 5'b und 5'c ist entsprechend dem Aufbau des längenveränderbaren Lenkers 6 aus Fig. 2 bis 4.

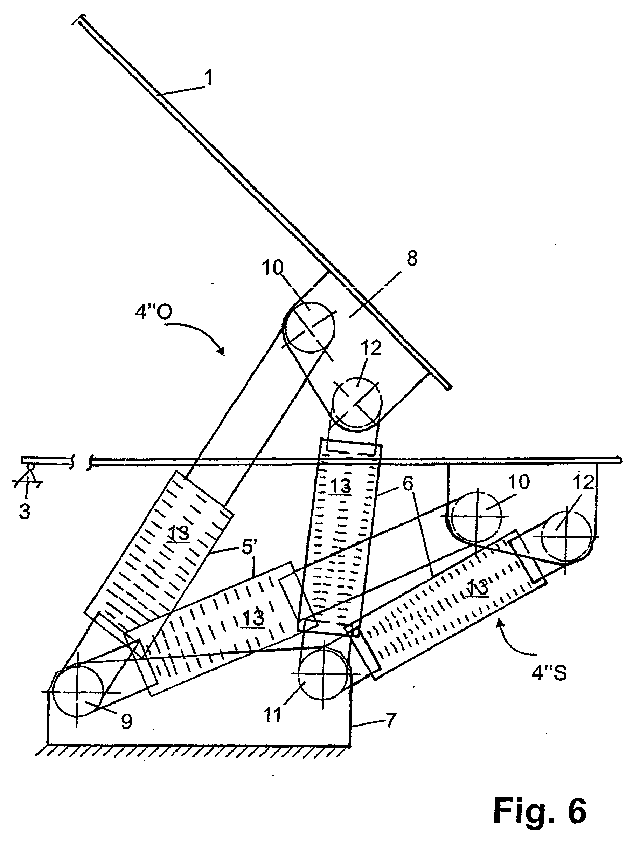

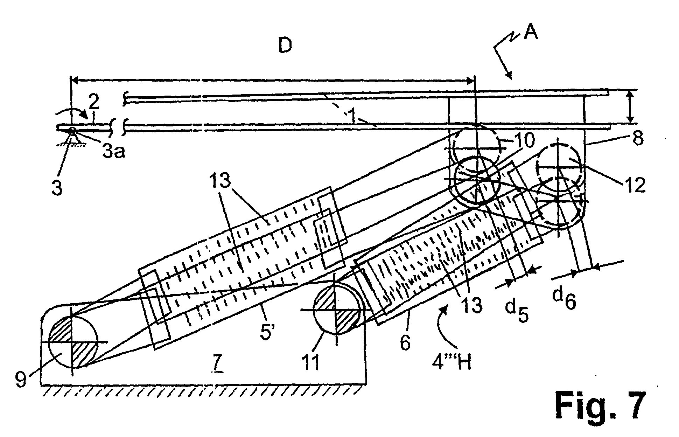

Fig. 6 und 7 zeigen eine weitere Ausführungsform 4" eines Viergelenk-Scharniers für eine Fronthaubenanordnung wie in Fig. 1 gezeigt, wobei hier der längere Lenker 5' und der kürzere Lenker 6 beide mit jeweils einem Energiespeicher 13 ausgebildet sind, der nicht notwendigerweise identisch ausgestaltet sein muß. Diese besonders bevorzugte Ausbildung des Viergelenk-Scharniers 4" weist insbesondere den Vorteil auf, daß das Haubenschloß 3 nur eine Drehachse um die Haubenschloßachse 3a definiert und durch die Differenz der Längenänderung d5 des längeren Lenkers 5' und d6 des kürzeren Lenkers 6 die bei den vorherigen Ausführungsbeispielen erforderliche Horizontalverlagerung der Fronthaube 1 und damit des Haubenschlosses 3 kompensiert. Die Fronthaube 1 schwenkt somit um die Achse 3a des Haubenschlosses 3, und lediglich die Höhe der Fronthaube 1 wird ausgehend von der in Fig. 7 gestrichelt dargestellten Schließstellung in die in durchgezogener Linie dargestellte Überlaststellung H verändert. Man erkennt, daß die Längenänderung des längeren Lenkers 5' geringer ausfällt als die des kürzeren Lenkers 6, wobei beide Lenker 5' und 6 in ihrer Länge gestaucht werden. Demgemäß ist der Energiespeicher 13 in beiden Lenkern 5' und 6 als Druckfeder ausgebildet, wodurch vorteilhaft beim Verschwenken der Fronthaube 1 in die in Fig. 6 in durchgezogener Linie dargestellte Öffnungsstellung O aus der in Fig. 6 gestrichelt dargestellten Schließstellung S das Eigengewicht der Fronthaube 1 durch dieselben Druckfedern aufgenommen wird.

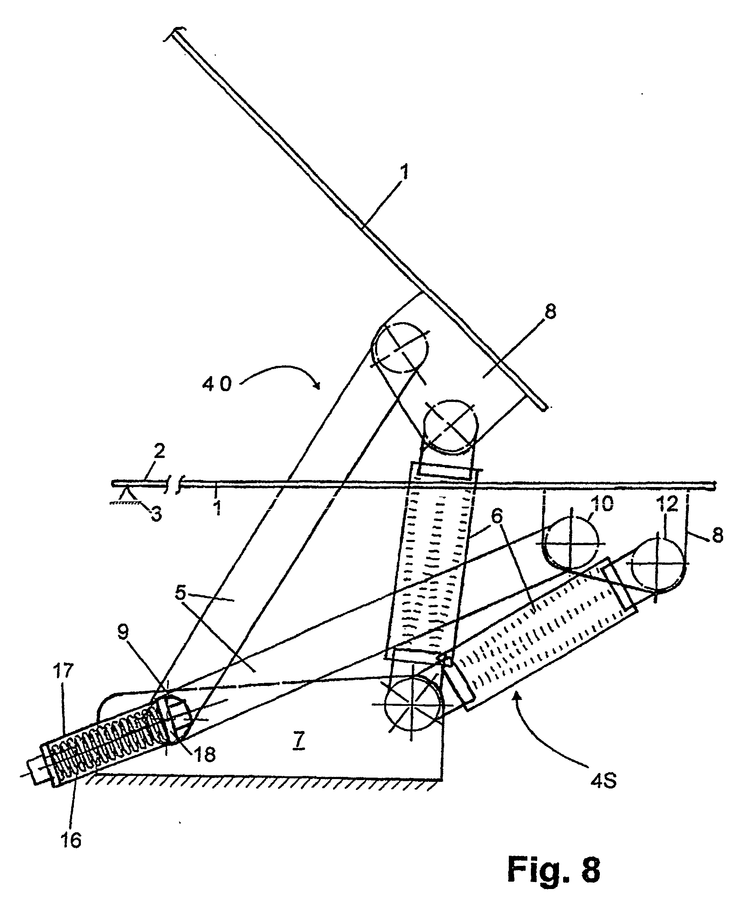

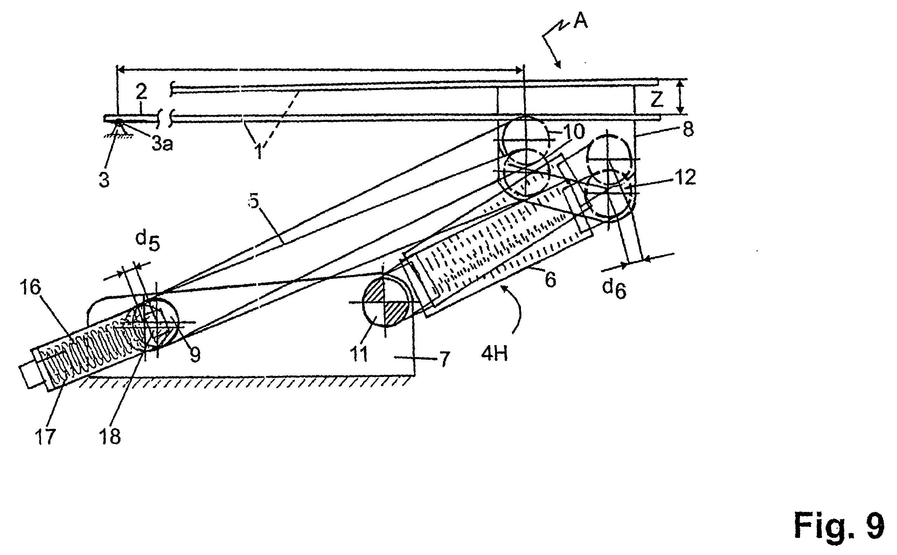

Eine weitere vorteilhafte Ausführungsform eines Viergelenk-Scharniers 4 für die Fronthaubenanordnung aus Fig. 1 ist in den Fig. 8 und 9 dargestellt, welche eine Weiterbildung der Fronthaubenanordnung der Fig. 1 bis 4 mit Viergelenk-Scharnier 4 zeigt, wobei diese Weiterbildung auch für die Viergelenk-Scharniere 4' und 4" in Betracht kommt.. Bei der weitergebildeten Fronthaubenanordnung ist dessen einer der Drehpunkte 9 und 11 des längeren Lenkers 5 bzw. kürzeren Lenkers 6 nicht starr in dem Rahmenteil 7 gelagert, sondern auf einem relativ zu dem Rahmenteil 7 gegen die Vorspannung einer als Druckfeder ausgebildeten Energiespeichereinheit 16 im wesentlichen in Verlängerung der Erstreckung des der Feder 16 zugeordneten längeren Lenkers 5 komprimierbar ist. Hierdurch wird die Lage des Drehgelenks 9 veränderlich ausgestaltet, wodurch das Haubenschloß 3 keine horizontale Verlagerung x wie in Fig. 4 auszuführen braucht, sonderndie Fronthaube 1 lediglich eine Schwenkbewegung um die Achse 3a des Haubenschlosses 3 ausführt.

In der in den Fig. 8 und 9 gezeigten Ausführungsform ist die Energiespeichereinheit 16 in etwa in axialer Verlängerung des längeren Lenkers 5 angeordnet und trägt deren, dem Rahmenteil 7 zugeordnetes, Drehgelenk 9 auf einem in einer Führung 17 angeordneten Reiter 18. Die in das Rahmenteil 7 integrierte Führung 17 ist im wesentlichen mit der Erstreckung des längeren Lenkers 5 im Belastungsfall H aufgrund der Last eines Aufpralls A eines Fußgängers ausgefluchtet. Vergleichbar zu der Ausführungsform der Fig. 6 und 7 erfolgt die Stauchung des kürzeren Lenkers 6 anhand des Energiespeichers 13, der vorzugsweise als Druckfeder ausgebildet ist und dessen Betrag größer ist als die Komprimierung der Energiespeichereinheit 16 aufgrund der Verlagerung des Drehgelenks 9. Der besondere Vorteil bei der vorliegenden Ausführungsform besteht darin, daß in der in Fig. 8 mit O bezeichneten Öffnungsstellung der Fronthaubenanordnung der Lenker 5 derart relativ zur Achse der Aufnahme 17 für die Energiespeichereinheit 16 verdreht ist, daß ein Nachgeben derselben ausgeschlossen ist.

Die Erfindung ist vorstehend anhand von verschiedenen Ausführungsbeispielen näher erläutert worden, die sämtlichst reversibel, als Federn ausgebildete, Energiespeicher gezeigt haben, die besonders bevorzugt sind. Es versteht sich, daß in gleicher Weise wie die Federn auch plastisch änderbare Materialbestandteile vorgesehen sein können, die eine ireversibel Längenänderung des längenveränderbar ausgebildeten Lenkers 5' und/oder 6 bewirken, die dadurch einen geringeren mechanischen Aufwand bei der Montage und bei der Fertigung bedeuten.

## Patentansprüche

1. Fronthaubenanordnung, bei der eine Fronthaube (1) eines Fahrzeugs über mindestens ein Mehrgelenk-Scharnier (4) an den Rahmen des Fahrzeugs angelenkt ist, welche Fronthaube (1) ferner über wenigstens ein Haubenschloß (3) verriegelbar ist,
**dadurch gekennzeichnet,**
**daß** das mindestens eine Mehrgelenk-Scharnier (4) unter der Last eines Aufpralls eines Fußgängers wenigstens einen mit veränderbarer Länge ausgebildeten Lenker (6; 5') aufweist.

2. Fronthaubenanordnung nach Anspruch 1, **dadurch gekennzeichnet, daß** auch ein anderer Lenker des Mehrgelenk-Scharniers (4) mit veränderbarer Länge ausgebildet ist.

3. Fronthaubenanordnung nach Anspruch 1 oder 2, **dadurch gekennzeichnet, daß** der wenigstens eine mit veränderbarer Länge ausgebildete Lenker (6; 5') einen integrierten Energiespeicher (13) umfaßt, wobei aufgrund der Energie des Aufpralls die Längenänderung des wenigstens einen Lenkers (6; 5') durch Spannen des Energiespeichers (13) erfolgt.

4. Fronthaubenanordnung nach Anspruch 3, **dadurch gekennzeichnet, daß** der Energiespeicher (13) eine Feder (14, 15) umfaßt, die reversibel ausdehnbar ausgebildet ist.

5. Fronthaubenanordnung nach Anspruch 3 oder 4, **dadurch gekennzeichnet, daß** der Energiespeicher (13) einen deformierbaren Bestandteil umfaßt, der die Aufprallenergie in Deformationsenergie durch plastische Formänderung des Betandteils umwandelt.

6. Fronthaubenanordnung nach einem der Ansprüche 1 bis 5, **dadurch gekennzeichnet, daß** beiderseits der Fronthaube (1) jeweils ein Mehrgelenk-Scharnier (4; 4'; 4") angeordnet ist.

7. Fronthaubenanordnung nach einem der Ansprüche 1 bis 6, **dadurch gekennzeichnet, daß** die Fronthaube (1) zugleich mit der Änderung der Länge des wenigstens einen Lenkers (5'; 6) eine Verlagerungsbewegung in Richtung (x) auf die Windschutzscheibe des Fahrzeugs ausführt.

8. Fronthaubenanordnung nach einem der Ansprüche 1 bis 7, **dadurch gekennzeichnet, daß** die an der Fronthaube (1) angeschlagenen Drehgelenke (10, 12) der Lenker (5, 6) des Mehrgelenk-Scharniers (4) bei Aufprall eines Fußgängers auf die Fronthaube (1) eine definierte Bewegung um die fest an der Karosserie des Fahrzeugs angeordneten Drehgelenke (9, 11) der Lenker (5, 6) ausführen.

9. Fronthaubenanordnung nach einem der Ansprüche 1 bis 7, **dadurch gekennzeichnet, daß** die an der Fronthaube (1) angeschlagenen Drehgelenke (10, 12) der Lenker (5, 6) des Mehrgelenk-Scharniers (4) bei Aufprall eines Fußgängers auf die Fronthaube (1) eine definierte Bewegung um die an der Karosserie des Fahrzeugs angeordneten Drehgelenke (9, 11) der Lenker (5, 6) ausführen, und daß bei einem Aufprall einer der Lenker (5) mit seinem karosserieseitigen Drehgelenk (9) eine in Richtung auf die Ruhelage des Lenkers (5) vorgespannten Energiespeichereinheit (16) gegen seine Vorspannung zur wenigstens teilweisen Kompensation der Längenänderung des mit veränderbaren Länge ausgebildeten Lenkers (6) unter entsprechender Änderung seiner Lage zur Karosserie spannt.

10. Fronthaubenanordnung nach Anspruch 9, **dadurch gekennzeichnet, daß** die Energiespeichereinheit (16) überwiegend in axialer Verlängerung des zugeordneten Lenkers (5) angeordnet ist, wenn das an der Fronthaube (1) angeordnete Scharnierteil (8) des Mehrgelenk-Scharniers (4) durch Längenänderung des mit veränderbaren Länge ausgebildeten Lenkers (6) bei einem Aufprall auf die Fronthaube (1) aus seiner Ausgangsstellung heraus verlagert ist.

11. Fronthaubenanordnung nach einem der Ansprüche 1 bis 10, **dadurch gekennzeichnet, daß** das Haubenschloß (3) in seinem verriegelten Zustand ein horizontales Verlagern (x) der Fronthaube (1) zuläßt.

12. Fronthaubenanordnung nach Anspruch 11, **dadurch gekennzeichnet, daß** das Haubenschloß (3) insgesamt verlagerbar ist.

13. Fronthaubenanordnung nach Anspruch 11, **dadurch gekennzeichnet, daß** das Haubenschloß (3) einen Ausweichraum im Anschluß an seine verriegelte Schließlage aufweist, der eine Führung für eine im wesentlichen horizontale Verlagerung der Fronthaube (1) bzw. eines mit der Fronthaube (1) verbundenen Halteteils nach hinter definiert.

14. Fronthaubenanordnung nach einem der Ansprüche 11 bis 13, **dadurch gekennzeichnet, daß** ein Energiespeicherglied das Haubenschloß entgegen einem horizontalen Verlagern (x) vorspannt und bei einem Aufprall das Energiespeicherglied unter Aufnahme eines Teils der Aufprallenergie spannbar ist.

15. Fronthaubenanordnung nach einem der Ansprüche 1 bis 14, **dadurch gekennzeichnet, daß** der Abstand der beiden Drehpunkte (10, 12; 9, 11) des wenigstens einen mit veränderlicher Länge ausgebildeten Lenkers (6; 5') sich bei einem Aufprall eines Fußgängers vergrößert.

16. Fronthaubenanordnung nach einem der Ansprüche 1 bis 15, **dadurch gekennzeichnet, daß** das Mehrgelenk-Scharnier (4, 4', 4") derart an dem Rahmen des Fahrzeugs angeordnet ist, daß die Fronthaube (1) bei Lösen des Haubenschlosses (3) ohne Veränderung der Länge des wenigstens einen Lenkers (6; 5') des Mehrgelenk-Scharniers (4, 4', 4") öffnenbar ist.

17. Fronthaubenanordnung nach einem der Ansprüche 1 bis 16, **dadurch gekennzeichnet, daß** das Mehrgelenk-Scharnier als Viergelenk-Scharnier (4, 4', 4") ausgebildet ist.

18. Fronthaubenanordnung nach einem der Ansprüche 1 bis 16, **dadurch gekennzeichnet, daß** das Mehrgelenk-Scharnier (4, 4', 4") als Siebengelenk-Scharnier ausgebildet ist.

19. Fronthaubenanordnung nach einem der Ansprüche 1 bis 16, **dadurch gekennzeichnet, daß** das Mehrgelenk-Scharnier (4, 4', 4") als Zweigelenk-Scharnier ausgebildet ist.

20. Fronthaubenanordnung nach einem der Ansprüche 1 bis 19, **dadurch gekennzeichnet, daß** der wenigstens eine mit veränderbarer Länge ausgebildete Lenker teleskopierbar ausgebildet ist.

21. Fronthaubenanordnung nach einem der Ansprüche 1 bis 20, **dadurch gekennzeichnet, daß** das Mehrgekenk-Scharnier (4) im fahrbereiten Zustand des Fahrzeugs in einer nachgiebigen angehobenen Lage angeordnet ist.

22. Viergelenk-Scharnier, bei dem der Abstand der beiden Anlenkungen wenigstens eines Lenkers (6; 5') veränderbar ist,
**dadurch gekennzeichnet,**
**daß** zur Veränderung des Abstands durch eine Überlast der wenigstens eine Lenker (6; 5') zur Ausführung einer Längung oder Stauchung ausgebildet ist.

## Claims

1. A front-hood arrangement, wherein a front hood (1) of a vehicle is coupled to the frame of the vehicle via at least one multiple-joint hinge (4), which front hood (1) can be also be locked by means of at least one hood lock (3),
**characterized in**
**that** the at least one multiple-joint hinge (4) has at least one link (6; 5') which is designed to change in length under the load of an impact of a pedestrian.

2. The front-hood arrangement as claimed in claim 1, **characterized in that** another link of the multiple-joint hinge (4) is designed to change in length.

3. The front-hood arrangement as claimed in claim 1 or 2, **characterized in that** the at least one link (6; 5') which is designed to change in length comprises an integrated energy store (13), the change in length of the at least one link (6; 5') being effected through stressing of the energy store (13) as a result of the energy of the impact.

4. The front-hood arrangement as claimed in claim 3, **characterized in that** the energy store (13) comprises a spring (14, 15) which is designed to extend reversibly.

5. The front-hood arrangement as claimed in claim 3 or 4, **characterized in that** the energy store (13) comprises a deformable component which converts the impact energy into deformation energy through plastic deformation of the component.

6. The front-hood arrangement as claimed in one of claims 1 to 5, **characterized in that** a multiple-joint hinge (4; 4'; 4") is arranged on both sides of the front hood (1).

7. The front-hood arrangement as claimed in one of claims 1 to 6, **characterized in that** the front hood (1), at the same time as the change in length of the at least one link (5'; 6), executes a translational movement in the direction (x) toward the windshield of the vehicle.

8. The front-hood arrangement as claimed in one of claims 1 to 7, **characterized in that** the rotary joints (10, 12), which are mounted on the front hood (1), of the links (5, 6) of the multiple-joint hinge (4), in the event of an impact of a pedestrian on the front hood (1), execute a defined movement about the rotary joints (9, 11), which are arranged fixed to the body of the vehicle, of the links (5, 6).

9. The front-hood arrangement as claimed in one of claims 1 to 7, **characterized in that** the rotary joints (10, 12), which are mounted on the front hood (1), of the links (5, 6) of the multiple-joint hinge (4), in the event of an impact of a pedestrian on the front hood (1), execute a defined movement about the rotary joints (9, 11), which are arranged on the body of the vehicle, of the links (5, 6), and **in that**, in the event of an impact, one of the links (5), by means of its body-side rotary joint (9), stresses an energy storage unit (16), which is prestressed toward the at-rest position of the link (5), counter to its prestress, in order to at least partially compensate for the change in length of the link (6), which is designed to change in length, with a corresponding change in its position with respect to the body.

10. The front-hood arrangement as claimed in claim 9, **characterized in that** the energy storage unit (16) is arranged mainly as an axial extension of the associated link (5) when the hinge part (8) of the multiple-joint hinge (4) arranged on the front hood (1) has been displaced out of its starting position as a result of a change in length of the link (6), which is designed to change in length, in the event of an impact on the front hood (1).

11. The front-hood arrangement as claimed in one of claims 1 to 10, **characterized in that** the hood lock (3) allows horizontal displacement (x) of the front hood (1) in its locked position.

12. The front-hood arrangement as claimed in claim 11, **characterized in that** the hood lock (3) overall is displaceable.

13. The front-hood arrangement as claimed in claim 11, **characterized in that** the hood lock (3) has a yield space adjoining its locked position, which provides defined guidance for a substantially horizontal displacement of the front hood (1) or of a holding part connected to the front hood (1) toward the rear.

14. The front-hood arrangement as claimed in one of claims 11 to 13, **characterized in that** an energy storage member prestresses the hood lock in the opposite direction to a horizontal displacement (x) and, in the event of an impact, the energy storage member can be stressed, so as to absorb some of the impact energy.

15. The front-hood arrangement as claimed in one of claims 1 to 14, **characterized in that** the distance between the two rotation points (10, 12; 9, 11) of the at least one link (6; 5') which is designed to change in length increases in the event of an impact of a pedestrian.

16. The front-hood arrangement as claimed in one of claims 1 to 15, **characterized in that** the multiple-joint hinge (4, 4', 4") is arranged on the frame of the vehicle in such a manner that the front hood (1) can be opened when the hood lock (3) is released without the length of the at least one link (6; 5') of the multiple-joint hinge (4, 4', 4") changing.

17. The front-hood arrangement as claimed in one of claims 1 to 16, **characterized in that** the multiple-joint hinge is designed as a four-joint hinge (4, 4', 4").

18. The front-hood arrangement as claimed in one of claims 1 to 16, **characterized in that** the multiple-joint hinge (4, 4', 4") is designed as a seven-joint hinge.

19. The front-hood arrangement as claimed in one of claims 1 to 16, **characterized in that** the multiple-joint hinge (4, 4', 4") is designed as a two-joint hinge.

20. The front-hood arrangement as claimed in one of claims 1 to 19, **characterized in that** the at least one link, which is designed to change in length, is of telescopic design.

21. The front-hood arrangement as claimed in one of claims 1 to 20, **characterized in that** the multiple-joint hinge (4), when the vehicle is ready to drive, is arranged in a resilient, raised position.

22. A four-joint hinge wherein the distance between the two articulation points of at least one link (6; 5') can be changed,
**characterized in**
**that**, to change the distance, the at least one link (6; 5') is designed to be lengthened or compressed as a result of an overload.

## Revendications

1. Ensemble de capot avant dans lequel un capot avant (1) d'un véhicule est articulé sur le châssis du véhicule au moyen d'au moins une charnière à multiple articulations (4), lequel capot avant (1) peut en outre être verrouillé au moyen d'au moins une serrure de capot (3),
**caractérisé en ce**
**que** l'au moins une charnière à multiple articulations (4) comporte au moins un bras (6 ; 5') conformé de façon à avoir une longueur modifiable sous l'effort généré par une collision avec un piéton.

2. Ensemble de capot avant selon la revendication 1, **caractérisé en ce qu'**un autre bras de la charnière à multiple articulations (4) est conformé de façon à avoir une longueur modifiable.

3. Ensemble de capot avant selon la revendication 1 ou 2, **caractérisé en ce que** l'au moins un bras (6 ; 5'), conformé de façon à avoir une longueur modifiable, comporte un accumulateur d'énergie intégré (13), la variation de longueur de l'au moins un bras (6 ; 5') est effectuée en tendant l'accumulateur d'énergie (13) en raison de l'énergie de la collision.

4. Ensemble de capot avant selon la revendication 3, **caractérisé en ce que** l'accumulateur d'énergie (13) comporte un ressort (14, 15) qui est conformé pour être extensible de façon réversible.

5. Ensemble de capot avant selon la revendication 3 ou 4, **caractérisé en ce que** l'accumulateur d'énergie (13) comporte un composant déformable qui transforme l'énergie de la collision en énergie de déformation par déformation plastique du composant.

6. Ensemble de capot avant selon l'une des revendications 1 à 5, **caractérisé en ce qu'**une charnière à multiple articulations (4 ; 4' ; 4") est agencée de chaque côté du capot avant (1).

7. Ensemble de capot avant selon l'une des revendications 1 à 6, **caractérisé en ce que** le capot avant (1) subit en même temps que la modification de la longueur de l'au moins un bras (5' ; 6) un déplacement en direction (x) du pare-brise du véhicule.

8. Ensemble de capot avant selon l'une des revendications 1 à 7, **caractérisé en ce que** les articulations (10, 12), montées sur le capot avant (1), des bras (5, 6) de la charnière à multiple articulations (4) réalisent en cas de collision avec un piéton sur le capot avant (1) un mouvement défini autour des articulations (9, 11), agencées fixes sur la carrosserie du véhicule, des bras (5, 6).

9. Ensemble de capot avant selon l'une des revendications 1 à 7, **caractérisé en ce que** les articulations (10, 12), montées sur le capot avant (1), des bras (5, 6) de la charnière à multiple articulations (4) réalisent en cas de collision avec un piéton sur le capot avant (1) un déplacement défini autour des articulations (9, 11), montées sur la carrosserie du véhicule, des bras (5, 6) et **en ce que** en cas de collision l'un des bras (5), doté de son articulation du côté de la carrosserie (9), tend l'unité d'accumulation d'énergie (16), préalablement tendue en direction de la position de repos du bras (5), en s'opposant à une tension préalable pour compenser au moins partiellement la variation de longueur du bras (6) conformé de façon à avoir une longueur modifiable, en modifiant de façon correspondante sa position par rapport à la carrosserie.

10. Ensemble de capot avant selon la revendication 9, **caractérisé en ce que** l'unité d'accumulation d'énergie (16) est agencée sensiblement dans le prolongement axial du bras associé (5) lorsque la pièce de charnière (8), agencée sur le capot avant (1), de la charnière à multiple articulations (4) est déplacée en cas de collision sur le capot avant (1) depuis sa position de départ en modifiant la longueur du bras (6) conformé de façon à avoir une longueur modifiable.

11. Ensemble de capot avant selon l'une des revendications 1 à 10, **caractérisé en ce que** la serrure de capot (3) permet dans son état verrouillé un déplacement horizontal (x) du capot avant (1).

12. Ensemble de capot avant selon la revendication 11, **caractérisé en ce que** la serrure de capot (3) est dans l'ensemble déplaçable.

13. Ensemble de capot avant selon la revendication 11, **caractérisé en ce que** la serrure de capot (3) comporte un espace d'évitement dans le raccordement à sa position de fermeture verrouillée, lequel espace d'évitement défini en arrière un guide pour un déplacement essentiellement horizontal du capot avant (1) ou d'une partie de retenue reliée au capot avant (1).

14. Ensemble de capot avant selon l'une des revendications 11 à 13, **caractérisé en ce que** l'élément accumulateur d'énergie de la serrure de capot est préalablement tendu en s'opposant à un déplacement horizontal (x) et en cas de collision l'élément accumulateur d'énergie peut être tendu en recevant une partie de l'énergie de la collision.

15. Ensemble de capot avant selon l'une des revendications 1 à 14, **caractérisé en ce que** la distance entre les deux articulations (10, 12 ; 9, 11) de l'au moins un bras (6; 5'), conformé de façon à avoir une longueur modifiable, augmente en cas de collision avec un piéton.

16. Ensemble de capot avant selon l'une des revendications 1 à 15, **caractérisé en ce que** la charnière à multiple articulations (4, 4', 4") est agencée sur le châssis du véhicule de sorte que le capot avant (1) peut être ouvert en cas de détachement de la serrure de capot (3) sans modifier la longueur de l'au moins un bras (6 ; 5') de la charnière à multiple articulations (4, 4', 4").

17. Ensemble de capot avant selon l'une des revendications 1 à 16, **caractérisé en ce que** la charnière à multiple articulations se présente sous la forme d'une charnière à quadruple articulations (4, 4', 4").

18. Ensemble de capot avant selon l'une des revendications 1 à 16, **caractérisé en ce que** la charnière à multiple articulations (4, 4', 4") se présente sous la forme d'une charnière à septuple articulations.

19. Ensemble de capot avant selon l'une des revendications 1 à 16, **caractérisé en ce que** la charnière à multiple articulations (4, 4', 4") se présente sous la forme d'une charnière à double articulations.

20. Ensemble de capot avant selon l'une des revendications 1 à 19, **caractérisé en ce que** l'au moins un bras conformé de façon à avoir une longueur modifiable est conformé pour être télescopique.

21. Ensemble de capot avant selon l'une des revendications 1 à 20, **caractérisé en ce que** la charnière à multiple articulations (4) est agencée dans une position soulevée élastique lorsque le véhicule est dans un état prêt à rouler.

22. Charnière à quadruple articulations dans lequel la distance entre les deux articulations d'au moins un bras (6 ; 5') est modifiable,
**caractérisé en ce**
**que** l'au moins un bras (6; 5') est conformé pour réaliser un allongement ou un écrasement en vue de modifier la distance par une surcharge.
